# EUROPÄISCHE PATENTSCHRIFT

(11) **EP 1 047 869 B1**
(45) Veröffentlichungstag und Bekanntmachung des Hinweises auf die Patenterteilung: **29.10.2003**
(21) Anmeldenummer: 99938189.0
(22) Anmeldetag: 12.06.1999
(51) Int. Cl.: F02M 25/08, F16K 31/06

(54) **VENTIL ZUM DOSIERTEN EINLEITEN VON VERFLÜCHTIGTEM BRENNSTOFF**
VALVE FOR THE CONTROLLED INTRODUCTION OF VOLATILIZED FUEL
VANNE POUR L'INTRODUCTION DOSEE DE CARBURANT VOLATILISE

(30) Priorität: 17.11.1998 DE 19852980
(43) Veröffentlichungstag der Anmeldung: 02.11.2000
(73) Patentinhaber: ROBERT BOSCH GMBH, 70442 Stuttgart (DE)
(72) Erfinder: KRIMMER, Erwin, D-73655 Pluederhausen (DE); SCHULZ, Wolfgang, D-74321 Bietigheim-Bissingen (DE); MIEHLE, Tilman, D-71394 Kernen (DE); ZIMMERMANN, Manfred, D-74906 Bad Rappenau (DE); MEISIEK, Achim, D-73635 Rudersberg (DE); ESPERILLA, Maria, D-74336 Meimsheim (DE)
(86) Internationale Anmeldenummer: DE9901729
(87) Internationale Veröffentlichungsnummer: WO00029738

(56) Entgegenhaltungen:
- EP-A- 0 722 061
- DE-A- 4 244 113
- DE-A- 19 611 886
- GB-A- 2 117 090
- US-A- 4 986 246
- US-A- 5 178 116
- US-A- 5 809 977

## Beschreibung

### Stand der Technik

Die Erfindung betrifft ein Ventil zum dosierten Einleiten von aus einem Brennstofftank einer Brennkraftmaschine verflüchtigtem Brennstoff in die Brennkraftmaschine nach der Gattung des Anspruchs 1.

Ein solches Ventil geht beispielsweise aus der DE 42 44 113 A1 sowie aus der DE 196 11 886 A1 hervor.

Derartige Ventile dienen der Regenerierung von Adsorptionsfiltern für Brennstoffverdunstungs-Rückhaltesysteme des Brennstofftanks von Fahrzeugen.

Infolge einer getakteten Ansteuerung des die Ventilstellung beeinflussenden Elektromagneten, kann es zu störenden Betriebsgeräuschen infolge einer Berührung relativ zueinander bewegter Teile kommen.

Bei dem aus der DE 42 44 113 A1 vorgesehenen Ventil ist zur Verringerung derartiger störender Betriebsgeräusche wenigstens ein Dämpferelement vorgesehen, das das Ventilschließglied in axialer Richtung durchragt und das an der ersten Stirnseite des Ventilschließgliedes eine zum Ventilsitzkörper gerichtete erste Dämpfungsfläche, sowie an der zweiten Stirnseite des Ventilschließgliedes eine zum Elektromagneten gerichtete zweite Dämpfungsfläche bildet, so däß ein Aufprall des Ventilschließgliedes auf den Ventilsitzkörper bzw. auf den Magnetkern gedämpft wird.

Aus der DE 196 11 886 A1 ist es bekannt, in das Ventilglied zur Durchgangsöffnung hin offene das Ventilglied längs durchragende Axialnuten einzubringen, die mit Dämpfungsmaterial ausgefüllt sind, das über die zweite Stirnfläche des Ventilglieds übersteht. Durch das in die durchgehenden Axialnuten eingebrachte Dämpfungsmaterial kann das Dämpfungsmaterial in dem zweiten Dämpfungsabschnitt untergebracht werden, ohne daß im Ventilglied ferromagnetisches Ankermaterial, das für einen ausreichenden Magnetfluß im Ventilglied zu dessen schneller Bewegung erforderlich ist, in nennenswertem Umfang verlorengeht. Der Dämpfungsabschnitt wird auf diese Weise bei gleicher Wandstärke der Dämpfungsmaterialauskleidung in der Durchgangsöffnung um die zusätzlichen Dämpfungsflächen vergrößert, die sich auf der Stirnseite jeder Axialnut durch das dort vorstehende Dämpfungsmaterial ergeben. Darüber hinaus kann hierdurch die Höhe des auf der Stirnseite überstehenden Materialrings der Durchgangsöffnungsauskleidung verkleinert werden, was einen Zuwachs an Magnetkraft mit sich bringt.

Aufgabe der Erfindung ist es, ein Ventil der gattungsgemäßen Art derart weiterzubilden, daß das Betriebsgeräusch bei erhöhtem Luftdurchsatz, d.h. für größere Regeneriermengen, weiter verringert wird

### Vorteile der Erfindung

Diese Aufgabe wird bei einem Ventil zum dosierten Einleiten von aus einem Brennstofftank einer Brennkraftmaschine verflüchtigtem Brennstoff in die Brennkraftmaschine der eingangs beschriebenen Art erfindungsgemäß durch die Merkmale des Anspruchs 1 gelöst.

Durch den Ventilsitzkörper, der in einer axial angeordneten Öffnung im Rückschlußjoch angeordnet ist und der sich auf seiner dem Ventilglied abgewandten Seite über ein Lagerelement aus Dämpfungsmaterial an einer Gehäusewand des Magnetventils abstützt, wird eine Übertragung der Taktgeräusche beim getakteten Ansteuern des Ventils auf das Gehäuse und von diesem auf metallische Teile der Brennkraftmaschine weitestgehend vermieden. Jeder Aufprall des Ventilglieds auf dem Ventilsitzkörper wird von dem vom Rückschlußjoch getrennt angeordneten Ventilsitzkörper auf das Lagerelement aus Dämpfungsmaterial und erst dann auf das Ventilgehäuse übertragen. Durch diesen mehrfach gedämpften Körperschallübertragungsweg wird die Geräuschentwicklung stark verringert.

Bei einer vorteilhaften Ausführungsform ist dabei vorgesehen, daß das Lagerelement den Ventilsitzkörper auf seiner dem Ventilglied abgewandten Seite wenigstens teilweise umschließt. Auf diese Weise wird eine Dämpfung nicht nur in Ventilschließrichtung, sondern auch senkrecht zur Ventilschließrichtung erzielt.

Bei einer besonders vorteilhaften Ausführungsform ist vorgesehen, daß das Lagerelement die Gestalt eines dem Ventilglied zugewandten Topfes aufweist, in dessen Innerem wenigstens ein dem Lagerelement zugewandter Teil des Ventilsitzkörpers angeordnet ist.

Diese Ausführungsform hat insbesondere den großen Vorteil, daß eine einfache, da vollautomatische Fertigung, möglich ist, da das Lagerelement zusammen mit dem Ventilsitzkörper auf einfache Weise in dem Ventilgehäuse montiert werden kann.

### Zeichnung

Weitere Vorteile und Merkmale der Erfindung sind Gegenstand der nachfolgenden Beschreibung sowie der zeichnerischen Darstellung der Ausführungsbeispiele.

In der Zeichnung zeigen:
- Fig. 1: schematisch einen Längsschnitt durch ein aus dem Stand der Technik bekanntes Ventil;
- Fig. 2: schematisch einen Längsschnitt durch einen Ventilsitzkörper und ein Lagerelement eines erfindungsgemäßen Ventils;
- Fig. 3: eine Längsschnittdarstellung einer anderen Ausführungsform eines erfindungsgemäßen Ventils;
- Fig. 4: eine Stirnansicht eines Ventilsitzkörpers des in Fig. 3 dargestellten Ventils;
- Fig. 5: eine Längsschnittansicht des in Fig. 4 dargestellten Ventilsitzkörpers;
- Fig. 6: eine Stirnansicht eines Lagerelements des in Fig. 3 dargestellten Ventils und
- Fig. 7: eine Längsschnittansicht des in Fig. 6 dargestellten Lagerelements.

### Beschreibung der Ausführungsbeispiele

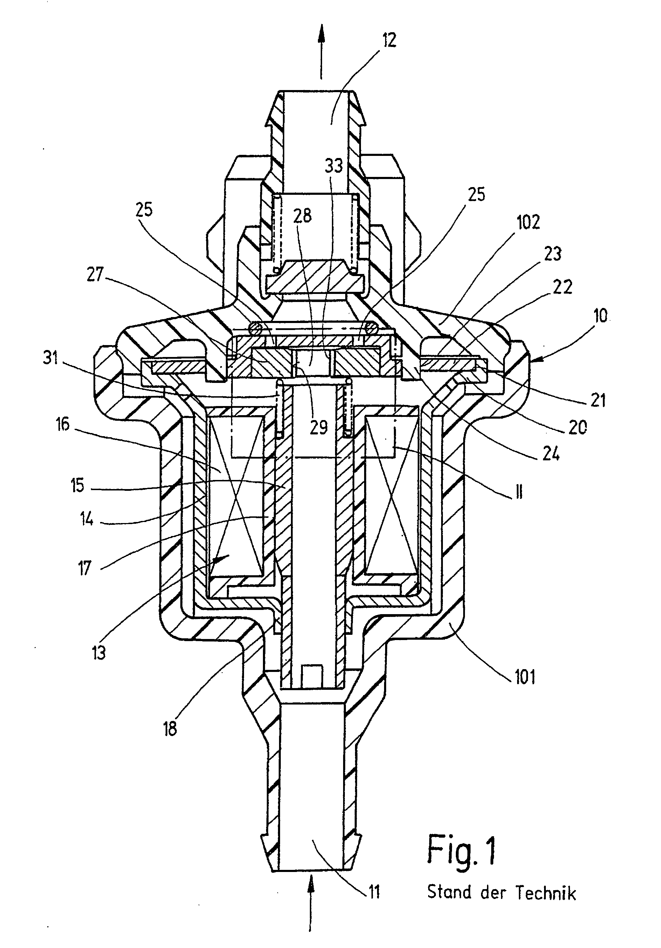

Ein aus dem Stand der Technik bekanntes, in Fig. 1 im Längsschnitt dargestelltes Tankentlüftungsventil als Ausführungsbeispiel für ein beliebiges Magnetventil, dient zum dosierten Zumischen von aus dem Brennstofftank einer (nicht dargestellten) gemischverdichtenden fremdgezündeten Brennkraftmaschine verflüchtigtem Brennstoff in die Brennkraftmaschine, z.B. in ein Ansaugrohr oder bei einer Benzindirekteinspritzung direkt in einen Zylinder der Brennkraftmaschine und ist Teil eines nicht näher dargestellten Brennstoffverdunstungs-Rückhaltesystems einer Brennkraftmaschine. Der Aufbau und die Funktion derartiger Brennstoffverdunstungs-Rückhaltesysteme ist beispielsweise der "Bosch Technische Unterrichtung Motormanagement Motronic", 2. Ausgabe, August 1993, Seiten 48 und 49 entnehmbar. Ein Tankentlüftungsventil und dessen Funktion geht beispielsweise aus der DE 42 44 113 A1 sowie aus der DE 196 11 886 A1, auf die vorliegend Bezug genommen wird, hervor.

Das Tankentlüftungsventil weist ein zweiteiliges Ventilgehäuse 10 mit einem topfförmigen Gehäuseteil 101 und einem diesen abschließenden, kappenförmigen Gehäuseteil 102 auf. Der Gehäuseteil 101 trägt einen Zuströmstutzen 11 zum Anschließen an einen Entlüftungstutzen des Brennstofftanks oder an einen diesem nachgeschalteten, mit Aktivkohle gefüllten Speicher für den verflüchtigten Brennstoff. Der Gehäuseteil 102 trägt einen Abströmstutzen 12 zum Anschließen an das Ansaugrohr der Brennkraftmaschine. Der Zuströmstutzen 11 und der Abströmstutzen 12 sind miteinander fluchtend jeweils axial in den Gehäuseteilen 101, 102 angeordnet. Im Inneren des topfförmigen Gehäuseteils 101 ist ein Elektromagnet 13 angeordnet.

Der Elektromagnet 13 weist ein topfförmiges Magnetgehäuse 14 mit einem den Topfboden durchdringenden, koaxialen, hohlzylindrischen Magnetkern 15 und eine zylindrische Erregerspule 16 auf, die auf einem Spulenträger 17 sitzt, der im Magnetgehäuse 14 den Magnetkern 15 umschließt. Am Boden des Magnetgehäuses 14 ist ein nach außen vorspringender Gewindestutzen 18 mit einem Innengewinde ausgebildet, das mit einem Außengewindeabschnitt des hohlzylindrischen Magnetkerns 15 verschraubt ist. Der Magnetkern 15 kann damit durch Drehen im Magnetgehäuse 14 zu Justierzwecken axial verschoben werden. Der Magnetkern 15 fluchtet mit dem Zuströmstutzen 11, so daß der hier einströmende, verflüchtigte Brennstoff direkt den Magnetkern 15 durchströmt.

Der Rand des Magnetgehäuses 14 ist nach außen zu einem ringförmigen Auflageflansch 20 abgewinkelt, der endseitig zu einem axial vorstehenden Ringsteg 21 umgebogen ist. Im Auflageflansch 20 ist ein das Rückschlußjoch 22 des Elektromagneten 13 bildender Ventilsitzkörper aufgenommen, der das Magnetgehäuse 14 abdeckt und randseitig an dem Ringsteg 21 anliegt. Das Rückschlußjoch 22 sitzt, wie es in Fig. 1 dargestellt ist, beispielsweise mittels wenigstens zweier Paßlöcher 23 auf im kappenförmigen Gehäuseteil 102 ausgebildeten Haltezapfen 24 auf und wird vom kappenförmigen Gehäuseteil 102 paßgenau in dem Auflageflansch 20 festgeklemmt. In dem den Ventilsitzkörper bildenden Rückschlußjoch 22 befinden sich zwei Ventilöffnungen, die mittels eines zwischen dem Rückschlußjoch 22 und dem Magnetkern 15 angeordneten Ventilgliedes 27 verschließbar sind. Zentral im Ventilglied 27 ist koaxial zum hohlzylindrischen Magnetkern 15 eine axiale Durchgangsöffnung 28 mit einer Begrenzungswand 29 vorgesehen, durch die vom Zuströmstutzen 11 herkommender, verflüchtigter Brennstoff bei geöffneten Ventilöffnungen 25 zum Abströmstutzen 12 gelangen kann. Das aus magnetisch leitendem Material hergestellte Ventilglied 27 ist von einer Ventilschließfeder 31 in Ventilschließrichtung in Richtung des Abströmstutzens 12 beaufschlagt. Die Ventilschließfeder 31 stützt sich einerseits am Ventilglied 27, andererseits an einem hülsenförmigen Ende des Magnetkerns 15 ab.

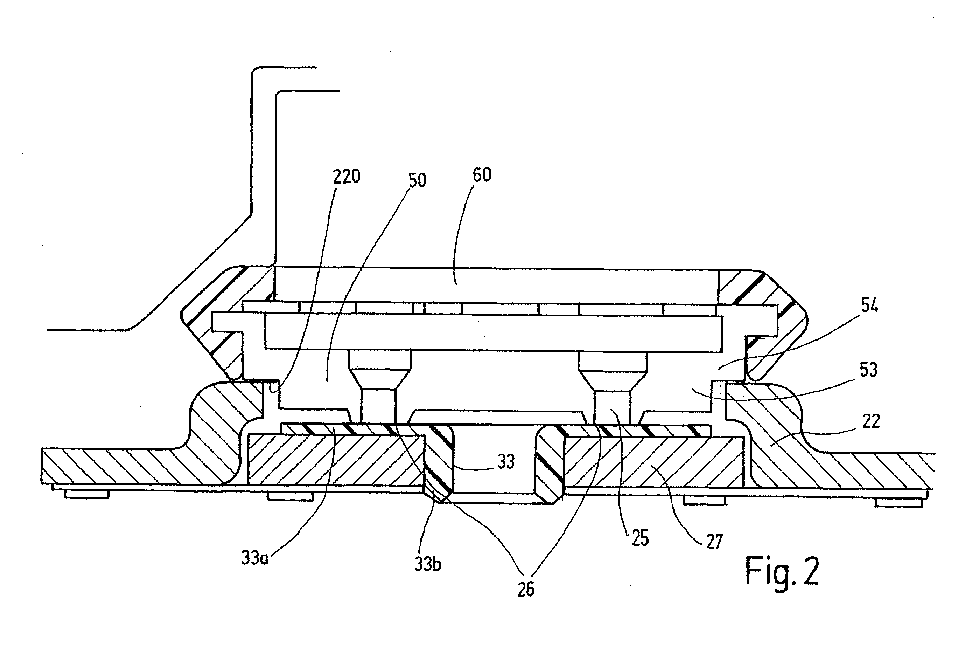

Das Ventilglied trägt an seiner dem Rückschlußjoch 22 zugewandten Seite ein abdichtendes Dämpferelement 33 aus elastischem Dämpfungsmaterial, z.B. Elastomer. Dieses Dämpferelement 33 kleidet auch die Durchgangsöffnung 28 im Ventilglied 27 aus. Es überdeckt einerseits einen auf der dem Rückschlußjoch 22 zugekehrten ersten Stirnfläche des Ventilglieds 27 sich flächenartig erstreckenden ersten Dämpfungsabschnitt 33a und andererseits einen über die dem Magnetkern 15 zugekehrte zweite Stirnseite des Ventilglieds 27 überstehenden zweiten Dämpfungsabschnitt 33b (siehe Fig. 2). Die Fläche des ersten Dämpfungsabschnitts 33a ist dabei mindestens so groß, daß der erste Dämpfungsabschnitt 33a bei geschlossenem Ventil die Öffnungen 25 der Ventilsitze 26 überdeckt.

Durch dieses Dämpferelement 33 aus Dämpfungsmaterial wird eine Geräuschverminderung beim taktförmigen Betrieb des Ventilglieds erzielt.

Um die Geräuschentwicklung weiter zu reduzieren, sieht eine in Fig. 2 dargestellte erste Ausführungsform vor, daß das Rückschlußjoch 22 eine Öffnung 220 aufweist, in der ein von dem Rückschlußjoch 22 getrennter stufenförmig ausgebildeter Ventilsitzkörper 50 mit einem Ventilsitzabschnitt 53 angeordnet ist. Der Ventilsitzkörper 50 überragt mit einem Anlageabschnitt 54 auf seiner dem Ventilglied 27 abgewandten und dem kappenförmigen Gehäuseteil 102 zugewandten Seite die Öffnung 220 im Rückschlußjoch 22 und ist dort von einem Lagerelement 60 aus elastomerem Material umschlossen, welches teilweise an dem kappenförmigen Gehäuseteil 102 anliegt und einerseits zur Vermeidung von Nebenleckluft und andererseits zur Dämmung der Übertragung von Körperschall dient. Die Körperschallübertragung auf das Gehäuse, d.h. auf den kappenförmigen Gehäuseteil 102 wird durch dieses Lagerelement 60 aus elastomerem Material erheblich reduziert. Der Ventilsitzkörper 50 kann aus Metall oder Kunststoff ausgebildet sein.

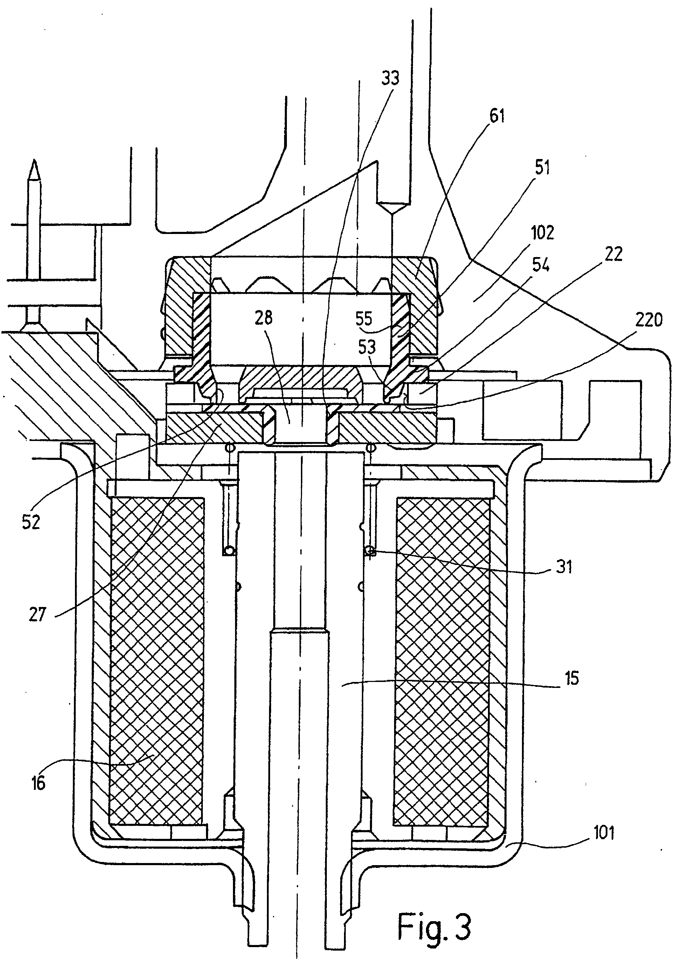

Bei einem zweiten, in Fig. 3 bis Fig. 7 dargestellten Ausführungsbeispiel sind diejenigen Elemente, die mit denen des ersten und des aus dem Stand der Technik bekannten identisch sind, mit denselben Bezugszeichen versehen, so daß bezüglich deren Beschreibung auf die obigen Ausführungen voll inhaltlich Bezug genommen wird.

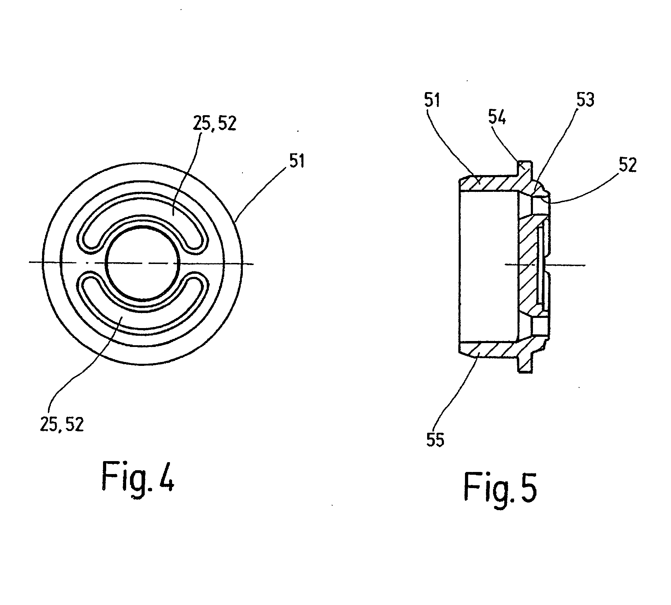

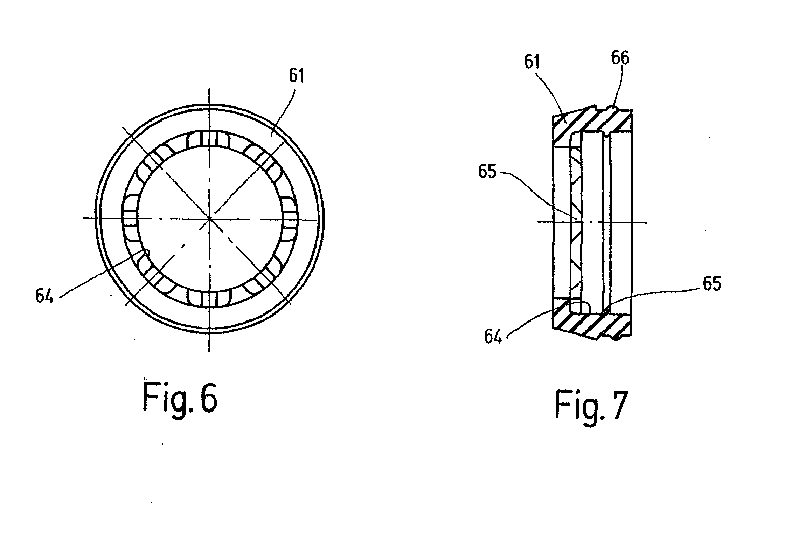

Im Gegensatz zu dem oben beschriebenen ersten Ausführungsbeispiel weist bei dem in Fig. 3 bis 7 dargestellten Ausführungsbeispiel das Lagerelement 61 die Gestalt eines dem Ventilglied 27 zugewandten Topfes auf, in dessen Innerem ein dem Lagerelement 61 zugewandter Teil des Ventilsitzkörpers 51 angeordnet ist. Der Ventilsitzkörper 51 weist hierzu an seiner dem Lagerelement 61 zugewandten Seite eine an das Innere des Lagerelements 61 angepaßte Gestalt auf, wie insbesondere aus Fig. 5 und Fig. 7 hervorgeht. In dem Ventilsitzkörper 51 sind teilkreisförmige Öffnungen 52 angeordnet, die den Ventilöffnungen 25 an sich bekannter und in Fig. 1 dargestellter Ventile entsprechen.

Das Lagerelement 61 weist eine zentrale gestufte Öffnung und an seiner Stirnseite dem Ventilsitzkörper 51 zugewandte Auflageelemente 65 auf. Das Lagerelement 61 kann zusammen mit dem Ventilsitzkörper 51 auf einfache Weise in dem Gehäuse montiert werden. Als Montagehilfe werden hierzu an den Bauteilen entsprechende Einführungsfacetten angeordnet. Besonders vorteilhaft ist insbesondere auch, daß das Lagerelement 61 auf einfache Weise herstellbar ist.

Der aus Metall oder Kunststoff ausgebildete Ventilsitzkörper 51 hat eine längliche zylindrische Form mit einem die Öffnungen 52 aufnehmenden Bodenteil, an dem ebenfalls der Ventilsitzabschnitt 53 und der Anlageabschnitt 54 ausgebildet sind und von dem ausgehend sich in vom Ventilglied 27 fortweisender Richtung ein Lagerabschnitt 55 erstreckt, an dem das Lagerelement 61 angreift. Um eine sichere Abdichtung zwischen Lagerabschnitt 55 und Lagerelement 61 zu gewährleisten, weist das Lagerelement 61 in seiner zentralen Öffnung wenigstens einen umlaufenden inneren erhabenen Noppenring 65 auf, der unter radialer Spannung gegenüber dem Lagerabschnitt 55 steht. Außerdem hat das Lagerelement 61 wenigstens einen umlaufenden erhabenen äußeren Noppenring 66, der unter radialer Spannung am Gehäuse 102 anliegt und abdichtet.

Bei einer Schließbewegung des Ventilgliedes 27 prallt das Ventilglied 27 auf den Ventilsitzkörper 50, 51 und das elastische Lagerelement 60, 61 verformt sich minimal, so daß der Ventilsitzkörper 50, 51 minimal von dem Rückschlußjoch 22 abhebt, wodurch eine direkte Körperschallübertragung zum Rückschlußjoch 22 unterbunden wird. Zum Gehäuse hin dämpft das Lagerelement 60, 61 die Körperschallübertragung.

## Patentansprüche

1. Magnetventil, insbesondere zur Tankentlüftung bei Kraftfahrzeugen mit einem Rückschlußjoch (22), mit wenigstens einer Ventilöffnung (25, 52) und mit einem zur Freigabe und zum Verschließen der wenigstens einen Ventilöffnung (25, 52) zusammenwirkenden, federbelasteten Ventilglied (27), das einen Magnetanker eines Elektromagneten (13) bildend, zwischen dem Rückschlußjoch (22) des Elektromagneten (13) und einem hohlzylindrischen Magnetkern (15) des Elektromagneten (13) angeordnet ist **dadurch gekennzeichnet, daß** in einer im Rückschlußjoch (22) axialen Öffnung (220) ein von dem Rückschlußjoch (22) getrennter und die wenigstens eine Ventilöffnung (25) aufweisender Ventilsitzkörper (50; 51) angeordnet ist, der sich auf seiner dem Ventilglied (27) abgewandten Seite über ein Lagerelement (60; 61) aus Dämpfungsmaterial an einer Gehäusewand (102) des Magnetventils abstützt.

2. Ventil nach Anspruch 1, **dadurch gekennzeichnet, daß** das Lagerelement (60; 61) den Ventilsitzkörper auf seiner dem Ventilglied (27) abgewandten Seite wenigstens teilweise umschließt.

3. Ventil nach Anspruch 1, **dadurch gekennzeichnet, daß** das Lagerelement (61) die Gestalt eines dem Ventilglied (27) zugewandten Topfes aufweist, in dessen Innerem ein dem Lagerelement (61) zugewandter und auf das Lagerelement angepaßter Teil des Ventilsitzkörpers (51) angeordnet ist.

4. Ventil nach einem der Ansprüche 1 bis 3, **dadurch gekennzeichnet, daß** der Ventilsitzkörper (50; 51) stufenförmig ausgebildet ist, die Öffnung (220) im Rückschlußjoch (22) mit einem Anlageabschnitt (54) überragt und sich mit einem Ventilsitzabschnitt (53) in die Öffnung (220) erstreckt.

## Claims

1. Solenoid valve, in particular for tank venting in motor vehicles, with a return yoke (22), with at least one valve orifice (25, 52) and with a spring-loaded valve member (27) which cooperates in order to open and to close the at least one valve orifice (25, 52) and which, forming a magnet armature of an electromagnet (13), is arranged between the return yoke (22) of the electromagnet (13) and a hollow-cylindrical magnet core (15) of the electromagnet (13), **characterized in that** there is arranged in an axial orifice (220) in the return yoke (22) a valve-seat body (50; 51) which is separate from the return yoke (22) and has at least one valve orifice (25) and which is supported, on its side facing away from the valve member (27), on a housing wall (102) of the solenoid valve via a bearing element (60; 61) consisting of damping material.

2. Valve according to Claim 1, **characterized in that** the bearing element (60; 61) at least partially surrounds the valve-seat body on its side facing away from the valve (27).

3. Valve according to Claim 1, **characterized in that** the bearing element (61) is in the form of a pot which faces the valve member (27) and inside which is arranged a part of the valve-seat body (51) which faces the bearing element (61) and which is adapted to the bearing element.

4. Valve according to one of Claims 1 to 3, **characterized in that** the valve-seat body (50; 51) has a step-shape design, projects with a bearing portion (54) beyond the orifice (220) in the return yoke (22) and extends with a valve-seat portion (53) into the orifice (220).

## Revendications

1. Soupape magnétique, en particulier pour le dégazage du réservoir de véhicules automobiles, comportant une carcasse (22) de blindage magnétique, présentant au moins une ouverture (25, 52) de soupape et, agissant conjointement pour le dégagement et le verrouillage de l'au moins une ouverture (25, 52), un organe de soupape (27) chargé par ressort qui, formant une ancre d'aimant d'un électro-aimant (13), est disposé entre la carcasse (22) de blindage magnétique de l'électro-aimant (13) et un noyau (15) magnétique cylindrique creux de l'électro-aimant (13),
**caractérisé en ce que**
dans une ouverture (220) axiale dans la carcasse (22) de blindage magnétique, est disposé un corps de siège de soupape (50 ; 51) séparé de la carcasse (22) de blindage magnétique, qui présente au moins une ouverture (25) de soupape, qui s'appuie à une paroi (102) de boîtier au travers d'un élément support (60 ; 61) en matériau d'amortissement sur son côté opposé à l'organe (27) de soupape.

2. Soupape selon la revendication 1,
**caractérisée en ce que**
l'élément support (60 ; 61) enferme au moins partiellement le corps de siège de soupape sur son côté opposé à l'organe (27) de soupape.

3. Soupape selon la revendication 1,
**caractérisée en ce que**
l'élément support (61) présente une forme de pot tourné vers l'organe de soupape (27) et à l'intérieur duquel une pièce du corps de siège (51) de soupape est disposée, tournée vers et adaptée à l'élément support (61).

4. Soupape selon l'une quelconque des revendications 1 à 3,
**caractérisée en ce que**
le corps de siège (50 ; 51) de soupape est étagé, l'ouverture (220) dans la carcasse (22) de blindage magnétique dépasse par une section d'appui (54) et s'étend dans l'ouverture (220) par une section de siège (53) de soupape.
